(19) Europäisches Patentamt
European Patent Office
Office européen des brevets

(11) **EP 1 718 925 B1**

(12) **EUROPÄISCHE PATENTSCHRIFT**

(45) Veröffentlichungstag und Bekanntmachung des Hinweises auf die Patenterteilung:
**09.04.2014 Patentblatt 2014/15**

(21) Anmeldenummer: **05700672.8**

(22) Anmeldetag: **04.01.2005**

(51) Int Cl.:
**G01B 11/00** *(2006.01)*

(86) Internationale Anmeldenummer:
**PCT/EP2005/000007**

(87) Internationale Veröffentlichungsnummer:
**WO 2005/085749 (15.09.2005 Gazette 2005/37)**

(54) **TASTKOPF FÜR EIN KOORDINATENMESSGERÄT**

SCANNING HEAD FOR A COORDINATE MEASURING DEVICE

SONDE POUR UN APPAREIL DE MESURE DE COORDONNEES

(84) Benannte Vertragsstaaten:
**DE FR GB IT**

(30) Priorität: **26.02.2004 DE 102004010566**

(43) Veröffentlichungstag der Anmeldung:
**08.11.2006 Patentblatt 2006/45**

(73) Patentinhaber: **Carl Zeiss Industrielle Messtechnik GmbH**
**73447 Oberkochen (DE)**

(72) Erfinder:
• **STACKLIES, Horst**
**73431 Aalen (DE)**
• **KNUPFER, Klaus**
**73457 Essingen (DE)**

(74) Vertreter: **Duhme, Torsten et al**
**Witte, Weller & Partner**
**Patentanwälte mbB**
**Postfach 10 54 62**
**70047 Stuttgart (DE)**

(56) Entgegenhaltungen:
**EP-A- 0 373 644    DE-A1- 3 826 581**
**GB-A- 2 150 282    US-A- 5 345 689**
**US-A- 5 659 969**

**Beschreibung**

Die vorliegende Erfindung betrifft einen Tastkopf für ein Koordinatenmessgerät, mit einer Tastkopfbasis und mit einem relativ dazu beweglichen Tastelement, insbesondere einem Taststift, ferner mit einem optischen Detektor zum Erfassen von Auslenkungen des Tastelements relativ zur Tastkopfbasis, wobei der optische Detektor einen Lichtsender zum Erzeugen einer definierten Lichtfigur und einen Lichtempfänger beinhaltet. Darüber hinaus betrifft die Erfindung ein Koordinatenmessgerät mit einem solchen Tastkopf.

Ein gattungsgemäßer Tastkopf für ein entsprechendes Koordinatenmessgerät ist beispielsweise aus EP 0 373 644 A1 bekannt.

Gattungsgemäße Koordinatenmessgeräte werden unter anderem dazu verwendet, die Objektform eines Messobjekts mit großer Genauigkeit zu vermessen. Beispielsweise wird damit die Objektform von maschinell hergestellten Werkstücken zur Qualitätskontrolle überprüft. Für den Messvorgang wird der Tastkopf des Koordinatenmessgeräts mit einem Verschiebegestell soweit an das Messobjekt herangefahren, bis der beweglich gelagerte Taststift einen gewünschten Messpunkt am Messobjekt berührt. Anschließend kann aus der Stellung des Tastkopfes und der relativen Lage des Taststiftes zum Tastkopf die Raumkoordinate des angetasteten Messpunktes bestimmt werden.

Um die relative Lage des Taststiftes zur Tastkopfbasis, mit anderen Worten also die Auslenkung des Taststiftes beim Antasten des Messobjekts, zu bestimmen, sind verschiedene Verfahren bekannt. Bei dem Tastkopf aus der eingangs genannten EP 0 373 644 A1 wird zu diesem Zweck ein optischer Detektor verwendet. Dieser beinhaltet zwei Lichtsender, die zwei diagonal aufeinander zulaufende Lichtstrahlen erzeugen, sowie ein zweidimensionales PSD (Position Sensitive Device) als Lichtempfänger. Wenn sich der Taststift in seiner nicht-ausgelenkten Ruhelage befindet, erzeugen die beiden Lichtstrahlen einen gemeinsamen Lichtpunkt in der Mitte des PSD. Wird der Taststift ausgelenkt, erzeugen die beiden Lichtstrahlen jeweils einen Lichtpunkt auf dem PSD, wobei die zwei Lichtpunkte abhängig von der Größe und Richtung der Auslenkung auf dem PSD wandern. Das PSD erzeugt abhängig von der Lage der Lichtpunkte zwei Ausgangsströme, mit deren Hilfe die Lage der Lichtpunkte auf dem PSD bestimmt werden kann. Aus den erhaltenen Werten lässt sich dann die Größe und Richtung der Taststiftauslenkung bestimmen. Aufgrund der besonderen Art der Anordnung der Lichtsender können in diesem Fall Auslenkungen des Taststiftes in allen drei Koordinatenrichtungen (x, y, z) erfasst werden.

Ein anderer Tastkopf mit optischer Erfassung der Taststiftauslenkungen ist aus WO 00/60307 bekannt. Auch in diesem Fall kommt ein zweidimensional messendes, photosensitives Detektorelement zum Einsatz. Die genaue Art der Auswertung ist dieser Druckschrift jedoch nicht zu entnehmen.

Aus DE 38 26 581 A1 ist ein dreidimensional messender Tastkopf bekannt, bei dem ein erstes optisches Detektorelement für die Auslenkungen des Taststiftes in x- bzw. y-Richtung und ein zweites, räumlich getrenntes, optisches Detektorelement zum Erfassen von Auslenkungen in z-Richtung verwendet wird.

Aus DE 27 41 413 A1 ist ferner ein zweidimensional messender Tastkopf bekannt, bei dem die Auslenkung des Taststiftes in x- und y-Richtung aus der Lage eines Lichtpunktes auf einem zweidimensionalen Feld von Photozellen bestimmt wird. Das Detektorfeld ist dazu in vier Quadranten unterteilt und die Lage des Lichtpunktes in einem oder mehreren der Quadranten ist ein Maß für die Auslenkung des Taststiftes.

Aus US 5,345,689 ist ein dreidimensional messender Tastkopf bekannt, der für alle drei Raumrichtungen jeweils eine optische Messvorrichtung aufweist. Der Tastkopf weist einen Taststift auf, welcher mit einer Blende verbunden ist. Durch Auslenkungen des Taststiftes wird die Blende entsprechend bewegt. Die Blende weist für jede Raumrichtung einen Schlitz auf und sie ist zwischen einer Lichtquelle und einem Lichtsensor angeordnet. Die Lichtquelle scheint durch den Schlitz hindurch und ein balkenförmiger Lichtstrahl trifft auf den Lichtsensor. Durch Bewegen der Blende wird auch der balkenförmige Lichtstrahl gegenüber dem Lichtsensor bewegt, so dass die Auslenkung des Taststifts erfasst werden kann. Es wird vorgeschlagen, als Lichtsensor jeweils eine geteilte Photodiode oder eine matrixartige CCD-Anordnung einzusetzen. Der Tastkopf besitzt somit drei Messvorrichtungen, die jeweils einer der Raumrichtungen zugeordnet sind. Die drei Messeinrichtungen und die Blende sind relativ großbauend, da sie innerhalb des Tastkopfs angeordnet sind und die Blende eine Größe aufweisen muss, die ermöglicht, dass sich die drei Messeinrichtungen gegenseitig nicht beeinflussen.

Darüber hinaus gibt es eine Vielzahl von Tastköpfen, bei denen die Auslenkungen des Taststiftes nicht auf optischem Wege, sondern mit anderen Detektoren, beispielsweise Tauchspulen oder Hallelementen, erfasst werden.

Die bekannten Tastköpfe haben jeweils für sich individuelle Stärken und Schwächen in Bezug auf die maximal erreichbare Messgenauigkeit, die maximale Messgeschwindigkeit und den maximal möglichen Messbereich und darüber hinaus in Bezug auf Größe und Gewicht des Tastkopfes, Robustheit und Preis. Keiner der bekannten Tastköpfe erfüllt alle denkbaren Anforderungen in gleicher Weise.

Vor diesem Hintergrund ist es eine Aufgabe der vorliegenden Erfindung, einen Tastkopf für ein Koordinatenmessgerät anzugeben, der bei kleiner Bauform eine hohe Messgenauigkeit und vor allem eine hohe Messgeschwindigkeit ermöglicht.

Diese Aufgabe wird erfindungsgemäß durch einen Tastkopf gemäß Anspruch 1 gelöst, bei dem der Lichtempfänger zumindest zwei Zeilensensoren mit jeweils einer Vielzahl von zeilenförmig aneinandergereihten lichtempfindlichen Elementen aufweist, wobei die zumindest zwei Zeilensensoren räumlich versetzt zueinander angeordnet sind, jedoch von der definierten Lichtfigur gemeinsam beleuchtet werden, und wobei mit Hilfe der Zeilensensoren ein Radius und eine Lage der Lichtfigur relativ zu den Zeilensensoren bestimmbar ist.

Bevorzugt handelt es sich bei den zumindest zwei Zeilensensoren um solche in CMOS-Technologie. Besonders geeignete Zeilensensoren werden beispielsweise in großem Umfang in kommerziellen Telefaxgeräten und Scannern eingesetzt. Aufgrund der damit verbundenen hohen Stückzahlen sind diese Zeilensensoren sehr kostengünstig erhältlich. Damit kann auch der neue Tastkopf kostengünstig hergestellt werden.

Die zumindest zwei Zeilensensoren sind räumlich versetzt zueinander angeordnet. Es handelt sich also um zwei räumlich getrennte, gewissermaßen diskrete Detektorelemente. Für sich gekommen ist ein Zeilensensor (nur) in der Lage, Messwerte zur Bestimmung der Tastkopfauslenkung in einer Raumrichtung zu liefern. Mit anderen Worten handelt es sich bei den Zeilensensoren um Messelemente für eine Dimension. Anschaulich bestehen die Zeilensensoren aus einer Reihe (Linie, Zeile) nebeneinander angeordneter, lichtempfindlicher Elemente (manchmal als Pixel bezeichnet). Durch den räumlichen Versatz der zumindest zwei Zeilensensoren und deren gemeinsame Beleuchtung mit einer gemeinsamen Lichtfigur wird jedoch eine Messebene festgelegt. Im einfachsten Fall genügen drei Mess- oder Detektionspunkte, wie nachfolgend anhand einiger Ausführungsbeispiele gezeigt wird, um Auslenkungen des Taststiftes in allen drei Raumrichtungen zu detektieren.

Die Verwendung von Zeilensensoren anstelle von zweidimensionalen Sensorelementen ermöglicht eine hohe Auslesegeschwindigkeit und damit verbunden eine hohe Messgeschwindigkeit. Die Messgenauigkeit kann einerseits durch die Anzahl der lichtempfindlichen Elemente in jedem Zeilensensor und darüber hinaus durch rechnerische Interpolationsmethoden beeinflusst werden. Praktische Versuche der Anmelderin haben gezeigt, dass mit bevorzugten Ausgestaltungen der Erfindung Messgeschwindigkeiten erreicht werden, die um den Faktor 10 bis 100 höher liegen als bei bisherigen Tastköpfen.

Ein weiterer Vorteil des neuen Tastkopfes ist der geringe Raumbedarf, den die räumlich versetzten Zeilensensoren benötigen. Daher kann der neue Tastkopf auch insgesamt sehr kleinbauend realisiert werden.

Die genannte Aufgabe ist damit vollständig gelöst.

In einer bevorzugten Ausgestaltung weist der Lichtempfänger zumindest drei, bevorzugt vier Zeilensensoren auf.

Die Verwendung von drei oder vier Zeilensensoren erhöht die Anzahl der erhaltenen Messwerte. Die zusätzliche Information kann einerseits dazu verwendet werden, die Messgenauigkeit des neuen Tastkopfs weiter zu steigern. Darüber hinaus bieten die redundanten Messwerte die Möglichkeit, die erhaltenen Messergebnisse auf Plausibilität zu prüfen, womit sich die Zuverlässigkeit der Messergebnisse steigern lässt. Wie nachfolgend anhand eines bevorzugten Ausführungsbeispiels gezeigt wird, ermöglicht die Verwendung von vier Zeilensensoren einen besonders einfachen und schnellen Auswertealgorithmus. Damit kann die Messgeschwindigkeit des neuen Tastkopfs noch weiter gesteigert werden.

In einer weiteren Ausgestaltung sind die Zeilensensoren räumlich so zueinander versetzt, dass sie ein Sensorkreuz bilden.

Diese Ausgestaltung ermöglicht eine besonders genaue Erfassung von Auslenkungen des Taststiftes sowie einen besonders einfachen und schnellen Auswertealgorithmus.

In einer weiteren Ausgestaltung weist der Lichtempfänger zwei in etwa parallele Zeilensensoren auf, die mit einem lateralen Abstand zueinander angeordnet sind.

Diese Ausgestaltung ist besonders bevorzugt, wenn nur zwei Zeilensensoren für den optischen Detektor verwendet werden. Sie kann grundsätzlich jedoch auch in Ergänzung zu weiteren Zeilensensoren Anwendung finden. In der besonders bevorzugten Ausgestaltung mit genau zwei Zeilensensoren lässt sich ein sehr kleinbauender Tastkopf realisieren. Aufgrund der geringen Teileanzahl ist dieser zudem sehr kostengünstig. Außerdem lassen sich in dieser Ausgestaltung Messtaktraten von mehr als 20 kHz mit kommerziell erhältlichen Zeilensensoren realisieren. Ein Tastkopf dieser Ausgestaltung ist daher besonders schnell.

In einer weiteren Ausgestaltung sind die Zeilensensoren seriell miteinander verschaltet.

Eine serielle Verschaltung ist beispielsweise von Zeilensensoren bekannt, die für kommerzielle Telefaxgeräte oder Scanner verwendet werden. Die serielle Zusammenschaltung dient in diesen Fällen dazu, die gewünschte Abtast- bzw. Papierbreite zu erreichen. Im vorliegenden Fall spielt diese Abtastbreite keine oder allenfalls eine untergeordnete Rolle. Die serielle Zusammenschaltung ermöglicht es jedoch, die Messwerte aller Zeilen- , sensoren mit einem einzigen Signalpfad auszulesen und zu verarbeiten. Der Hardware- und Kostenaufwand ist somit deutlich reduziert gegenüber einer mehrkanaligen, parallelen Signalauswertung. Die serielle, einkanalige Auswertung besitzt darüber hinaus den Vorteil, dass Bauteiltoleranzen zwischen verschiedenen Signalpfaden, beispielsweise in einem nachgeschalteten A/D-Wandler, keine Auswirkung haben, da alle Messwerte in genau gleicher Weise beeinflusst werden. Daher kann mit dieser Ausgestaltung eine besonders hohe Messgenauigkeit erreicht werden. Ein weiterer wesentlicher Vorteil dieser Ausgestaltung ist die reduzierte Verlustleistung, die sich aus der einkanaligen Signalverarbeitung und der damit verbundenen Reduzierung der Bauteile ergibt.

In einer weiteren Ausgestaltung besitzt jeder Zeilensensor eine Ausleserichtung und zumindest zwei Zeilensensoren sind in Bezug auf die jeweilige Ausleserichtung gegenläufig zueinander angeordnet.

Die zumindest zwei Zeilensensoren dieser Ausgestaltung sind also so zueinander angeordnet, dass sich die Lichtfigur bei einer Auslenkung des Taststiftes auf dem einen Zeilensensor in einer ersten Richtung und auf dem zweiten Zeilensensor in einer entgegengesetzten zweiten Richtung bewegt. Alternativ hierzu wäre es grundsätzlich auch möglich, die Zeilensensoren so zueinander anzuordnen, dass sich die Lichtfigur jeweils gleichläufig (bezogen auf die Ausleserichtung) über die Zeilensensoren bewegt. Die bevorzugte Ausgestaltung ermöglicht demgegenüber eine einfache Differenzbildung und damit einen besonders einfachen und schnellen Auswertealgorithmus, wie nachfolgend anhand eines bevorzugten Ausführungsbeispiels gezeigt wird.

In einer weiteren Ausgestaltung ist der Lichtsender zwischen den Zeilensensoren angeordnet, und zwar vorzugsweise auf einer gemeinsamen Trägerplatte mit den Zeilensensoren.

Diese Ausgestaltung ermöglicht eine symmetrische Beleuchtung der Zeilensensoren mit der einen Lichtfigur, wodurch sich die Auswertung weiter vereinfacht und außerdem ein optimal großer Messbereich möglich ist. Darüber hinaus lässt sich durch die Anordnung von Lichtsender und Zeilensensoren auf einer gemeinsamen Trägerplatte eine sehr kleinbauende Modulanordnung realisieren, die die Montage des Tastkopfes vereinfacht.

In einer weiteren Ausgestaltung ist die definierte Lichtfigur linienförmig, insbesondere eine Kreislinie.

Grundsätzlich können auch andere Lichtfiguren mit dem neuen Tastkopf verwendet werden. Anstelle einer Kreislinie ist beispielsweise auch eine Kreisscheibe oder eine andere flächige Lichtfigur möglich. Eine linienförmige Lichtfigur erlaubt jedoch eine höhere Messgenauigkeit, da die exakte Lage der Lichtfigur auch zwischen den Pixeln der Zeilensensoren durch Interpolationsverfahren genau bestimmt werden kann. Die Interpolation ist mit einer linienförmigen Lichtfigur einfacher und exakter möglich als mit einer flächigen Lichtfigur. Die bevorzugte Kreislinie kann zudem auf kostengünstige Weise mit hoher Genauigkeit erzeugt werden, was sich auf den Gesamtpreis und die Messgenauigkeit des neuen Tastkopfes vorteilhaft auswirkt.

In einer weiteren Ausgestaltung weist die linienförmige Lichtfigur einen im Querschnitt gaußähnlichen Intensitätsverlauf auf.

Die linienförmige Lichtfigur dieser Ausgestaltung besitzt also keine "scharfen" Intensitätssprünge. Im Gegenteil, sie ist beim Auftreffen auf die Zeilensensoren gewissermaßen "verschmiert". Andererseits besitzt sie ein eindeutiges Maximum mit beidseitig abfallenden Flanken. Eine solche Intensitätsverteilung ermöglicht eine besonders exakte Berechnung des Zentrums der Kreislinie und damit eine weitere Verbesserung der Messgenauigkeit.

In einer weiteren Ausgestaltung besitzt der neue Tastkopf eine Ringlinse zum Erzeugen der definierten Lichtfigur.

Eine Ringlinse, d.h. eine ringförmige Linsenstruktur, ist eine besonders einfache Möglichkeit, um die bevorzugt kreisförmige Lichtfigur zu erzeugen.

In einer weiteren Ausgestaltung ist die Ringlinse in einer zumindest teilweise transparenten Trägerplatte ausgebildet, die die Zeilensensoren überdeckt.

In dieser Ausgestaltung sind die lichtempfindlichen Zeilensensoren sehr gut vor Schmutz geschützt. Außerdem ermöglicht diese Ausgestaltung eine besonders einfache und damit kostengünstige Montage des neuen Tastkopfes.

In einer weiteren Ausgestaltung besitzt der neue Tastkopf einen Konusreflektor, der um den Lichtsender herum angeordnet ist. Vorzugsweise ist außerdem noch eine Zentralblende oberhalb des Konusreflektors angeordnet und weiter bevorzugt befindet sich eine Linse im Strahlengang der aus dem Konusreflektor austretenden Lichtstrahlen.

Ein um den Lichtsender herum angeordneter Konusreflektor ist eine weitere einfache Möglichkeit, um die bevorzugt kreislinienförmige Lichtfigur zu erzeugen. Darüber hinaus ermöglicht ein solcher Konusreflektor die Verwendung eines Lichtsenders mit einem wesentlich stärker geöffneten Lichtkegel, der mit Hilfe des Konusreflektors in die gewünschte Form gebracht wird. Der ausnutzbare Raumwinkel ist damit größer und der Lichtring bei gleicher Energieaufnahme heller. Der Intensitätsvorteil kann auf vielfältige Weise genutzt werden, nämlich die Realisierung höherer Messgeschwindigkeiten, höhere Messgenauigkeit, die Reduzierung des Versorgungsstroms für den Lichtsender und/oder eine verbesserte Unterdrückung gegenüber Falschlichteinflüssen. Auch kann durch Verwendung weiterer optischer Elemente beispielsweise die Tiefenschärfe besser beinflusst werden oder es kann eine nicht-kreisförmige Lichtfigur erzeugt werden. Die bevorzugte gaußähnliche Intensitätsverteilung kann aufgrund der höheren Grundhelligkeit der Lichtfigur ebenfalls leichter optimiert werden. Die Zentralblende besitzt den Vorteil, dass ein vom Konusreflektor austretender "Mittenspot", d.h. ein Lichtbereich im Innern der bevorzugten Kreislinie, unterdrückt wird. Hierdurch wird die nachfolgende Auswertung vereinfacht und zuverlässiger gemacht. Die angegebene Linse im Strahlengang der aus dem Konusreflektor austretenden Lichtstrahlen ermöglicht es ferner, einen größeren Abstand zwischen Lichtsender und Umlenkspiegel und/oder Zeilensensoren zu wählen. Die gesamte Abbildungsoptik wird optimiert.

In einer weiteren Ausgestaltung besitzt der Tastkopf ein transparentes Konuselement, das oberhalb des Lichtsenders angeordnet ist.

Ein solches Konuselement ist eine weitere einfache Möglichkeit, um die gewünschte Lichtfigur mit hoher Genauigkeit und großem Wirkungsgrad zu erzeugen. Auch in diesem Fall kann ein Lichtsender mit großem Austrittskegel verwendet werden, wodurch sich die bereits zuvor genannten Vorteile ergeben.

In einer weiteren Ausgestaltung besitzt der neue Tastkopf ein transparentes Zylinderelement, das oberhalb des Lichtsenders angeordnet ist. Vorzugsweise ist auch in diesem Fall eine Zentralblende vorgesehen.

Ein solches Zylinderelement ist eine weitere Möglichkeit, um einen Lichtsender mit großem Austrittskegel zu verwenden. Damit ergeben sich die genannten Vorteile auch in dieser Ausgestaltung. Darüber hinaus eröffnet ein solches Zylinderelement die Möglichkeit, die Abbildungsoptik zur Erzeugung der gewünschten Lichtfigur in einem Stück auszubilden, so dass sich die Montage des neuen Tastkopfes vereinfacht. In einer besonders bevorzugten Ausgestaltung ist das Zylinderelement beispielsweise mit einer Linsenkuppe am distalen Ende versehen, welche die vom Zylinderelement erzeugte Lichtfigur auf die Zeilensensoren fokussiert.

In einer weiteren Ausgestaltung besitzt der neue Tastkopf einen Kegelspiegel, der oberhalb des Lichtsenders angeordnet ist. Vorzugsweise ist auch in diesem Fall eine Zentralblende oberhalb des Lichtsenders vorgesehen.

Ein Kegelspiegel ist eine sehr einfache Möglichkeit, um die bevorzugte kreisringförmige Lichtfigur auf den Zeilensensoren zu erzeugen. Ein gewisser Nachteil dieser Ausgestaltung liegt allerdings darin, dass der Kegelspiegel sehr exakt montiert werden muss, während die vorher aufgezeigten Varianten alle mit einem Planspiegel kombiniert werden können, der relativ große Toleranzen bei der Montage erlaubt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1   ein Ausführungsbeispiel eines Koordinatenmessgerätes mit dem neuen Tastkopf,

Fig. 2   ein erstes Ausführungsbeispiel des neuen Tastkopfes in einer vereinfachten, schematischen Darstellung,

Fig. 3   verschiedene Lichtfiguren, die sich abhängig von der Auslenkung des Taststiftes bei einem Tastkopf gemäß Fig. 2 ergeben, sowie zugehörige Ausgangssignale des optischen Detektors,

Fig. 4   ein zweites Ausführungsbeispiel des neuen Tastkopfes in einer vereinfachten, schematischen Darstellung,

Fig. 5   ein drittes Ausführungsbeispiel des neuen Tastkopfes in einer vereinfachten, schematischen Darstellung;

Fig. 6   ein viertes Ausführungsbeispiel des neuen Tastkopfes in einer vereinfachten, schematischen Darstellung;

Fig. 7   ein fünftes Ausführungsbeispiel des neuen Tastkopfes in einer vereinfachten, schematischen Darstellung; und

Fig. 8   ein sechstes Ausführungsbeispiel des neuen Tastkopfes in einer stark vereinfachten, schematischen Darstellung.

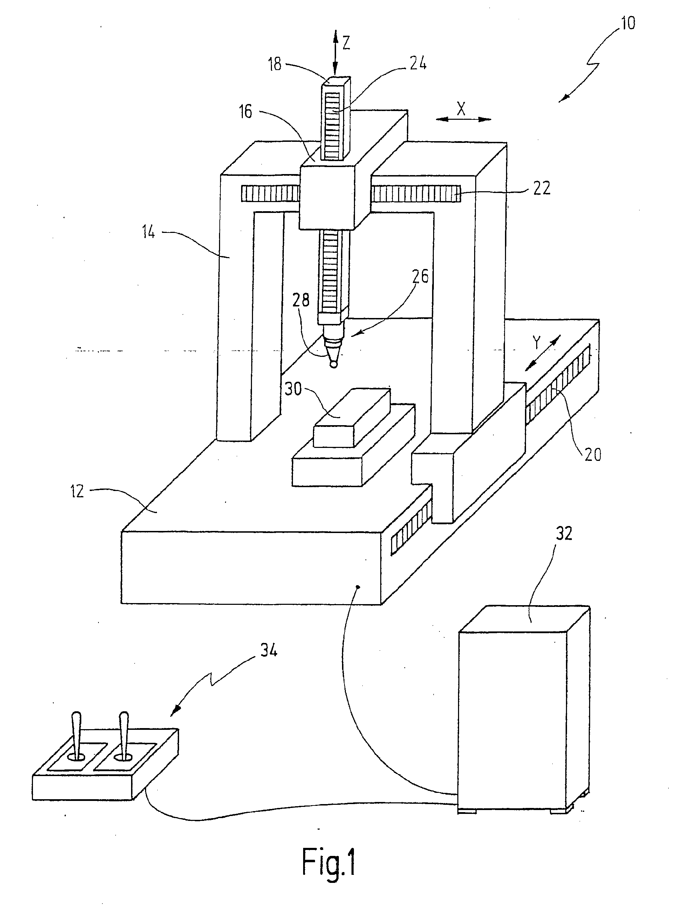

In Fig. 1 ist ein Koordinatenmessgerät in seiner Gesamtheit mit der Bezugsziffer 10 bezeichnet. Das Koordinatenmessgerät 10 besitzt eine Grundplatte 12, auf der ein Portal 14 in Längsrichtung verschieblich angeordnet ist. Diese Längsrichtung wird üblicherweise als y-Achse bezeichnet. Am oberen Querträger des Portals 14 ist ein in x-Richtung verschieblicher Schlitten 16 angeordnet, der wiederum eine in z-Richtung verstellbare Pinole 18 trägt. Mit den Bezugsziffern 20, 22, 24 sind Skalen bezeichnet, an denen sich die jeweilige Verstellposition des Portals 14, des Schlittens 16 und der Pinole 18 in den drei Raumrichtungen x, y, z ablesen lässt. Die Skalen 20, 22, 24 können typische Messskalen sein, die von einem Bediener des Koordinatenmessgerätes 10 abgelesen werden. Alternativ und/oder ergänzend handelt es sich hier jedoch um Wegmessgeber, die maschinell ausgelesen werden.

Am unteren freien Ende der Pinole 18 ist in an sich bekannter Weise ein Tastkopf 26 angeordnet, der einen hier nicht maßstabsgetreu dargestellten Taststift 28 trägt. Mit dem Taststift 28, der auch eine andere Form als hier dargestellt besitzen kann, werden definierte Messpunkte eines Messobjekts 30 angetastet. Das Messobjekt 30 ist dazu auf der Grundplatte 12 des Koordinatenmessgerätes 10 angeordnet. Aus der Stellung des Tastkopfes 26 im Messvolumen des Koordinatenmessgerätes 10 sowie der Auslenkung des Taststiftes 28 relativ zum Tastkopf kann die Raumkoordinate des angetasteten Messpunktes in an sich bekannter Weise bestimmt werden.

Mit der Bezugsziffer 32 ist eine Auswerte- und Steuereinheit bezeichnet, über die das Koordinatenmessgerät 10 gesteuert wird. Des Weiteren wertet die Auswerte- und Steuereinheit 32 die jeweilige Position von Tastkopf 26 und Taststift 28 aus, und sie stellt die Messergebnisse zur Dokumentation und/oder weiteren Verarbeitung bereit. Mit der Bezugsziffer 34 ist ferner noch ein Bedienpult bezeichnet, über das der Tastkopf 26 auch manuell gesteuert werden kann. Ein solches Bedienpult kann jedoch auch entfallen.

Das Koordinatenmessgerät 10 ist hier in sogenannter Portalbauweise dargestellt. Die Erfindung ist darauf jedoch nicht beschränkt und kann gleichermaßen bei Koordinatenmessgeräten in anderen Bauformen, beispielsweise in Horizontalarmbauweise, angewendet werden.

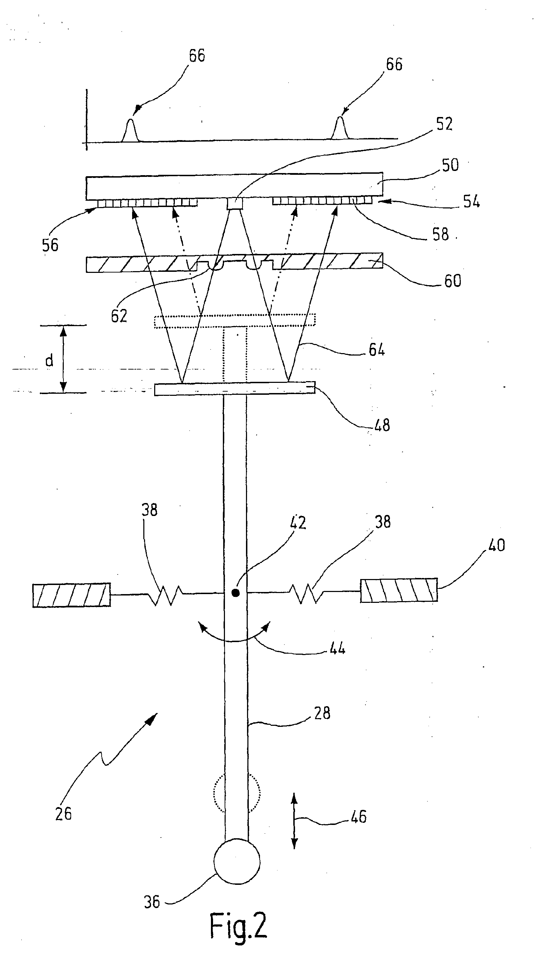

In Fig. 2 ist der Tastkopf 26 schematisch dargestellt. Der Taststift 28 besitzt an seinem unteren freien Ende eine Tastkugel 36 zum Antasten des Messobjekts 30. Er ist über hier schematisch dargestellte Federn 38 an einer Tastkopfbasis aufgehängt. Die Art der Aufhängung spielt für die Realisierung der vorliegenden Erfindung nur eine untergeordnete Rolle. Anstelle von Federn 38 können beispielsweise auch Linearführungen (Gleitlager, Rollenlager oder Ähnliches) verwendet sein. Die Federn 38 können beispielsweise in Form einer Membranfeder realisiert sein oder in Form von Federparallelogrammen oder Doppelfederparallelogrammen, wie dies den einschlägigen Fachleuten bekannt ist. Die Tastkopfbasis 40 kann beispielsweise das Gehäuse des Tastkopfes 26 oder ein mit diesen verbundenes Teil sein.

Der Taststift 28 ist hier in einem Kardanpunkt 42 beweglich aufgehängt und damit in der Lage, Schwenkbewegungen in Richtung eines Pfeils 44 auszuführen. Die Bewegung in Richtung des Pfeils 44 ergibt sich beispielsweise bei einer Auslenkung des Taststiftes 28 in x-Richtung. Für eine Auslenkung in y-Richtung kann der Taststift 28 eine Schwenkbewegung senkrecht zur Zeichenebene um den Kardanpunkt 42 durchführen. Eine Auslenkung des Taststiftes 28 in z-Richtung führt zu einem Höhenversatz, wie dies anhand eines Pfeils 46 angedeutet ist.

Der hier schematisch dargestellte Tastkopf 26 ist damit in der Lage, Auslenkungen in allen drei Raumrichtungen x, y, z auszuführen. Dies ist bevorzugt, da der nachfolgend beschriebene Detektor in der Lage ist, alle derartigen Auslenkungen zu erfassen. Grundsätzlich kann die Erfindung jedoch auch bei Tastköpfen angewendet werden, die nur für eine Auslenkung in ein oder zwei Richtungen vorgesehen sind.

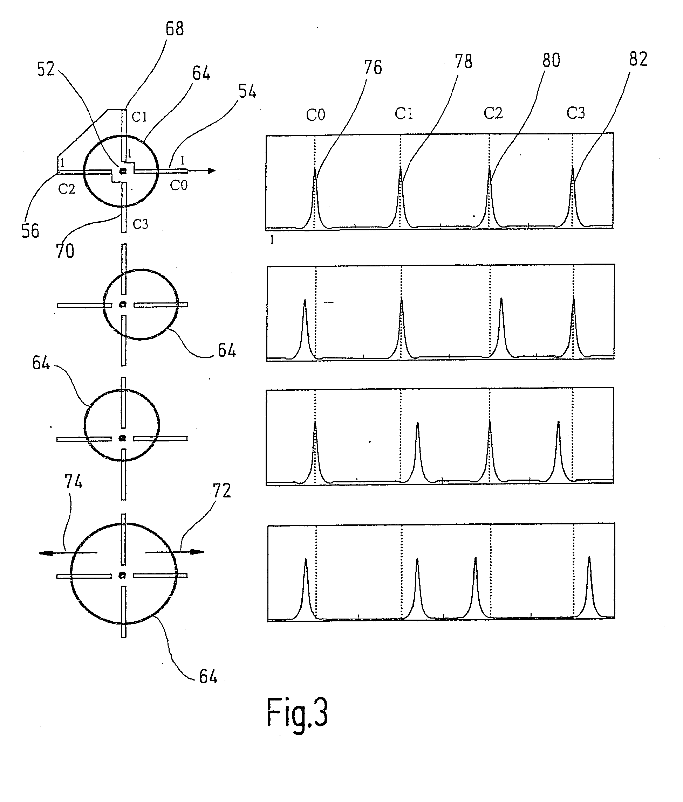

An seinem oberen Ende ist der Taststift 28 mit einem Spiegel 48 versehen, der in diesem Ausführungsbeispiel ein ebener Spiegel ist. Oberhalb des Spiegels 48 befindet sich eine Trägerplatte 50, auf der ein Lichtsender 52 (eine LED) und Zeilensensoren 54, 56 angeordnet sind. Im bevorzugten Ausführungsbeispiel sind insgesamt vier Zeilensensoren kreuzförmig zueinander um den Lichtsender 52 herum angeordnet, wie dies in der schematischen Draufsicht in Fig. 3 dargestellt ist. In der schematischen Seitenansicht gemäß Fig. 2 sind allerdings nur zwei Zeilensensoren 54, 56 zu sehen. Diese liegen auf gegenüberliegenden Seiten des Lichtsenders 52 und erstrecken sich radial von diesem weg nach außen.

Jeder Zeilensensor 54, 56 besitzt eine Vielzahl von nebeneinander angeordneten, lichtempfindlichen Elementen 58 (Pixeln). Bevorzugt sind die Zeilensensoren 54, 56 hier CMOS-Bildsensoren, wie sie beispielsweise aus Telefaxgeräten oder Scannern bekannt sind. Die Zeilensensoren 54, 56 sind in dem bevorzugten Ausführungsbeispiel auf derselben Trägerplatte 50 angeordnet wie der Lichtsender 52.

Grundsätzlich kann anstelle von "echt" diskreten Zeilensensoren auch ein zweidimensionaler Bildsensor verwendet werden, wenn dieser es erlaubt, die einzelnen Pixel gezielt zeilenweise, gewissermaßen also in diskreten Zeilen, auszulesen. Die Ausleserichtungen werden dann bevorzugt so gewählt, wie anhand der nachfolgenden Beispiele erläutert.

Mit der Bezugsziffer 60 ist eine weitere Trägerplatte bezeichnet, die zwischen der Trägerplatte 50 und dem Spiegel 48 angeordnet ist. Die Trägerplatte 60 ist transparent. Sie ist beispielsweise aus Glas oder Kunststoff hergestellt und überdeckt die Zeilensensoren 56, 58 und den Lichtsender 52. Im zentralen Bereich der Trägerplatte 60 ist eine Ringlinse 62 herausgearbeitet. Dies kann beispielsweise durch eine Drehbearbeitung mit einem Diamantwerkzeug oder mit einem geeigneten Spritzgießwerkzeug geschehen. Die Nachbarbereiche der Ringlinse sind vorzugsweise mattiert und lassen somit nur noch ungerichtetes Streulicht hindurch. Alternativ könnten diese Bereiche auch lichtundurchlässig gemacht sein.

Mit der Bezugsziffer 64 sind Lichtstrahlen bezeichnet, die vom Lichtsender 52 ausgehen und durch die Ringlinse 62 zu einer Lichtfigur geformt werden. Im bevorzugten Ausführungsbeispiel ist die Lichtfigur ein kreislinienförmiger Lichtring, wie dies in der schematischen Draufsicht in Fig. 3 gezeigt ist. Grundsätzlich sind jedoch auch andere Lichtfiguren im Rahmen der vorliegenden Erfindung möglich, beispielsweise eine Kreisscheibe, ein quadratischer Lichtring, ein Dreieck, eine Ellipse und anderes oder auch nur entsprechende Linien- oder Flächensegmente.

Die Lichtstrahlen aus dem Lichtsender 52 werden mit der Ringlinse 62 auf den Spiegel 48 gerichtet und von dort durch den transparenten Außenbereich der Trägerplatte 60 auf die Zeilensensoren 54, 56 reflektiert. Dort wird die Lichtfigur in der nachfolgend beschriebenen Weise ausgewertet.

Mit der Bezugsziffer 66 ist hier noch die Intensitätsverteilung der Lichtfigur 64 im Bereich der Zeilensensoren 54, 56 dargestellt. In dem bevorzugten Ausführungsbeispiel ist die Intensitätsverteilung etwa gaußförmig mit einer Breite, die zumindest zwei Pixel 58 der Zeilensensoren 54, 56 überdeckt. Grundsätzlich sind jedoch auch andere Intensitätsverteilungen möglich, beispielsweise $(\sin x/x)^2$.

Wie leicht nachzuvollziehen ist, verändert sich die auf die Zeilensensoren 54, 56 auftreffende Lichtfigur 64 in Abhängigkeit von den Auslenkungen des Taststiftes 28. In Fig. 2 ist in punktierter Linie eine Situation dargestellt, bei der der Taststift 28 in z-Richtung um eine Strecke d nach oben ausgelenkt wurde. Durch diese Auslenkung verkürzt sich der Abstand zwischen dem Lichtsender 52 und dem Spiegel 48. Der Lichtkegel des Lichtsenders 52 trifft früher auf den Spiegel 48 und wird mit kleinerem Radius auf die Zeilensensoren 54, 56 reflektiert. Umgekehrt würde eine Auslenkung des Taststiftes in entgegengesetzter Richtung dazu führen, dass sich der Radius der Lichtfigur 64 auf den Zeilensensoren 54, 56 vergrößert. Bei einer Auslenkung in x- bzw. y-Richtung verschiebt sich hingegen die Lichtfigur 64 seitlich. Diese verschiedenen Szenarien sind in Fig. 3 schematisch dargestellt.

Die oberste Abbildung in Fig. 3 zeigt die Draufsicht auf die Zeilensensoren 54, 56, 68, 70, die den Lichtsender 52 radial nach außen weisend (in Form eines Kreuzes) umgeben. Gemäß einer bevorzugten Ausführung sind die vier Zeilensensoren hier seriell miteinander verschaltet, d.h. das letzte lichtempfindliche Element des Zeilensensors 54 ist mit dem ersten lichtempfindlichen Element des Zeilensensors 68 verbunden, das letzte lichtempfindliche Element des Zeilensensors 68 ist mit dem ersten liehtempfindlichen Element des Zeilensensors 56 verbunden und dessen letztes lichtempfindliches Element ist wiederum mit dem ersten lichtempfindlichen Element des Zeilensensors 70 verbunden. Die Nummerierung der lichtempfindlichen Elemente jedes Zeilensensors definiert eine Ausleserichtung, die in der untersten Darstellung der Fig. 3 für die Zeilensensoren 54, 56 mit zwei Pfeilen 72, 74 schematisch angedeutet ist. Durch diese serielle Verschaltung der Zeilensensoren besitzen die jeweils einander gegenüberliegenden Zeilensensoren 54 und 56 bzw. 68 und 70 einander gegenläufige Ausleserichtungen 72, 74. Hierdurch wird eine besonders einfache Auswertung ermöglicht, wie nachfolgend erläutert wird.

Die oberste Darstellung in Fig. 3 zeigt die Lage der Lichtfigur 64 über den Zeilensensoren, wenn sich der Taststift 28 in seiner neutralen, nicht-ausgelenkten Position befindet. Die kreisringförmige Lichtfigur 64 erzeugt dann auf den vier Zeilensensoren jeweils einen Lichtfleck. Beim Auslesen der seriell verschalteten Zeilensensoren erhält man ein Signal, wie es in Fig. 3 rechts oben dargestellt ist. Das Ausgangssignal besitzt vier Peaks, die aufgrund der hier gewählten, symmetrischen Anordnung in gleichen Abständen voneinander auftreten und jeweils etwa mittig zu den Pixeln der einzelnen Zeilensensoren 52, 54, 68, 70 liegen. Der erste Peak 76 ist das Lichtsignal, das vom Zeilensensor 54 erfasst wird, der zweite Peak 78 ist das Lichtsignal auf dem Zeilensensor 68, der dritte Peak 80 gehört zum Zeilensensor 56 und der vierte Peak 82 wird vom Zeilensensor 70 geliefert.

Im zweiten Szenario der Fig. 3 ist der Taststift 28 in x-Richtung ausgelenkt. Die Lichtfigur 64 ist hier nach rechts verschoben. Dies hat zur Folge, dass die Peaks 76 und 80 im Ausgangssignal aus ihrer neutralen Ursprungsposition herausgewandert sind, während die Peaks 78, 82 nahezu unverändert geblieben sind. Aufgrund der einander entgegengesetzten Ausleserichtungen 72, 74, sind die beiden Peaks 76, 70 auseinandergewandert, d.h. ihr Abstand voneinander hat sich vergrößert. Die entsprechende x-Auslenkung lässt sehr einfach als Differenz berechnen, nämlich

$$\text{x-Auslenkung} = \text{Pos}\,(C2) - \text{Pos}\,(C0) - K1.$$

wobei Pos (C2) die neue Lage des Peaks 80, Pos (C0) die neue Lage des Peaks 76 und K1 eine Konstante bezeichnen, die der Entfernung der Peaks 76 und 80 im Ursprungszustand entspricht.

Für eine Auslenkung in y-Richtung gilt Vergleichbares. Allerdings sind in diesem Fall die Peaks 76, 80 weitgehend unverändert, während die Peaks 78 und 82 gegenläufig zueinander verschoben sind. Die Stärke der y-Auslenkung lässt sich berechnen als

$$\text{y-Auslenkung} = \text{Pos}\,(C1) - \text{Pos}\,(C3) - K2.$$

Im untersten Szenario der Fig. 3 ist eine Auslenkung allein in z-Richtung dargestellt. In diesem Fall verändert sich, wie bereits in Fig. 2 gezeigt, der Radius der Lichtfigur 64. Im Ausgangssignal der Zeilensensoren sind alle vier Peaks 76, 78, 80, 82 verschoben. Die z-Auslerikung lässt sich berechnen als

$$\text{z-Auslenkung} = \text{Pos}\,(C1) - \text{Pos}\,(C0)$$
$$+ \text{Pos}\,(C3) - \text{Pos}\,(C2) - K3,$$

wobei K3 eine Konstante ist, die dem Ursprungszustand entspricht.

Eine Besonderheit dieses Ausführungsbeispiels liegt darin, dass hier nicht nur die Zeilensensoren 52, 54 bzw. 68, 70 jeweils gegenläufig ausgelesen werden, sondern dass die Ausleserichtung zusätzlich so gewählt ist, dass die Zeilensensoren 52, 54 von außen nach innen ausgelesen werden, während die Zeilensensoren 68, 70 von innen nach außen gelesen werden (zu erkennen an der Lage des jeweiligen Pixels Nr. 1 in der obersten Darstellung von Fig. 3). Dies Besonderheit ermöglicht die beschriebene, besonders einfache Auswertung der z-Auslenkungen.

In einem alternativen Ausführungsbeispiel kommen nicht vier Zeilensensoren, sondern nur drei Zeilensensoren zum Einsatz, die den Lichtsender 52 radial nach außen weisend umgeben und somit ein Y-artiges Kreuz bilden. Es versteht sich, dass in diesem Fall der Auswertealgorithmus entsprechend abgeändert werden muss. Die anhand Fig. 3 aufgezeigten Veränderungen der Lichtfigur 64 lassen sich jedoch gleichermaßen erfassen.

Bei der nachfolgenden Beschreibung weiterer Ausführungsbeispiele bezeichnen gleiche Bezugszeichen jeweils dieselben Elemente wie zuvor.

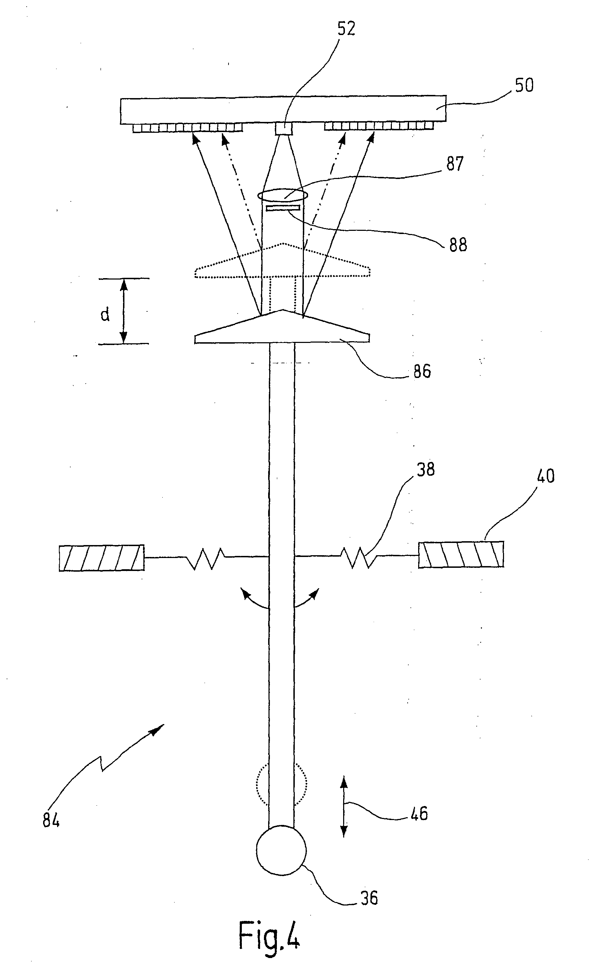

In Fig. 4 ist ein weiteres Ausführungsbeispiel des neuen Tastkopfes in seiner Gesamtheit mit der Bezugsziffer 84 bezeichnet. Der grundsätzliche Aufbau des Tastkopfes 84 entspricht dem des Tastkopfes 26 aus Fig. 2. Anstelle der Ringlinse 62 wird die kreisringförmige Lichtfigur 64 in diesem Fall jedoch über einen kegelförmigen Spiegel 86 erzeugt, der anstelle des ebenen Spiegels 48 am oberen Ende des Taststiftes 28 angeordnet ist. Zusätzlich ist über dem Lichtsender 52 eine Linse 87 und eine Zentralblende 88 angeordnet, um die kreisringförmige Lichtfigur zu erzeugen. In einfacheren Ausführungsbeispielen kann die Zentralblende 88 auch entfallen. Die Auswertung erfolgt beim Tastkopf 84 genauso, wie zuvor erläutert.

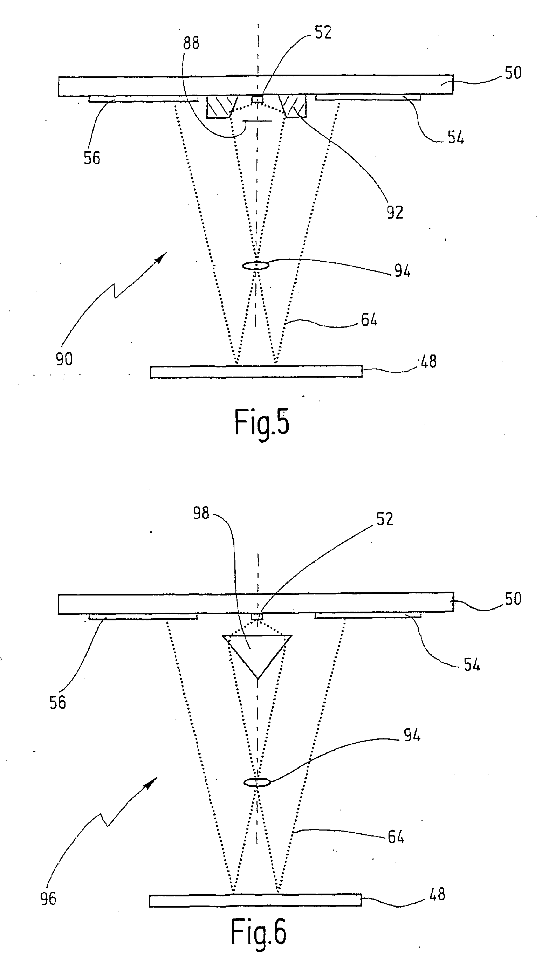

In Fig. 5 ist ein weiteres Ausführungsbeispiel des neuen Tastkopfes in seiner Gesamtheit mit der Bezugsziffer 90 bezeichnet. Der Einfachheit halber sind der Taststift 28 und seine mechanische Aufhängung hier nicht mehr dargestellt. Lediglich der Spiegel 48 ist in der Darstellung gezeigt.

Der Tastkopf 90 verwendet anstelle der Ringlinse 62 einen Konusreflektor 92, der um den Lichtsender 52 herum angeordnet ist. Um einen zentralen Mittenspot zu unterdrücken, ist oberhalb des Lichtsenders 52 wiederum eine Zentralblende 88 angeordnet. Diese kann in einfachen Ausführungsbeispielen auch entfallen, da die Auswertung im Wesentlichen auf den Peaks 76 bis 82 beruht. Der Konusreflektor 92 ermöglicht es, einen Lichtsender 52 mit größerem Austrittskegel zu verwenden und es lässt sich damit eine höhere Lichtausbeute erreichen.

Zwischen Konusreflektor 92 und Spiegel 48 ist hier noch eine Linse 94 angeordnet, die zur Strahlformung und damit Ausbildung der Lichtfigur 64 dient. Um eine vorteilhafte Tiefenschärfe zu erreichen, ist die Linse 94 ferner etwas abgeblendet (hier nicht dargestellt). Eine große Tiefenschärfe ist vorteilhaft, damit die Lichtfigur 64 weitgehend unabhängig von der Entfernung zwischen Lichtsender 52 und Spiegel 48 ist. Dies ermöglicht einen großen Hub in z-Richtung und damit einen großen Messbereich.

In Fig. 6 ist ein weiteres Ausführungsbeispiel für den neuen Tastkopf in seiner Gesamtheit mit der Bezugsziffer 96 bezeichnet. Bei dem Tastkopf 96 wird die Lichtfigur 64 refraktiv mit Hilfe eines kegelförmigen Glas- oder Kunststoffelements 98 erzeugt. In der Meridionalebene kann man sich die Wirkung dieses Konuselements 98 wie bei einem Prisma vorstellen. Im Übrigen ist die Funktionsweise ähnlich derjenigen in Fig. 5. Ein zentraler Mittenspot tritt in diesem Fall nicht auf, da steil in das Konuselement 98 eintretende Lichtstrahlen wegen der Totalreflexion zum Spiegel 48 hin nicht wieder austreten können.

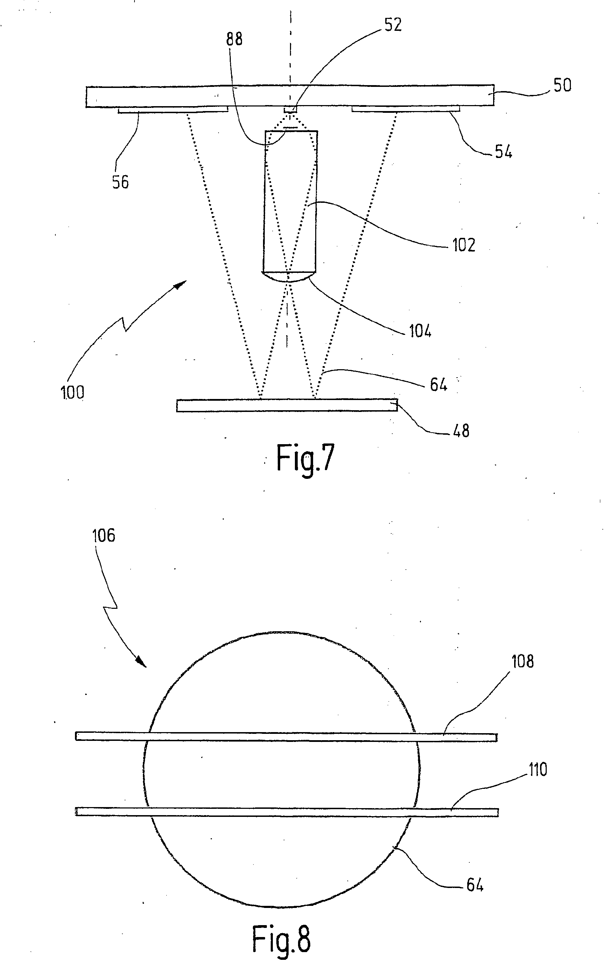

In Fig. 7 ist ein weiteres Ausführungsbeispiel des neuen Tastkopfes in seiner Gesamtheit mit der Bezugsziffer 100 bezeichnet. In diesem Fall wird die gewünschte Lichtfigur mit Hilfe eines Glas- oder Kunststoffzylinders 102 erzeugt. Die Strahlformung geschieht hier durch Brechung an der dem Lichtsender 52 zugewandten Ende des Zylinderelements 102 und durch Totalreflexion an den Zylinderinnenwänden. Zur Unterdrückung eines zentralen Mittenspots ist bevorzugt wiederum eine Zentralblende 88 vorgesehen.

Am distalen Ende des Zylinderelements 102 ist hier eine Linsenkuppe 104 ausgebildet. Des Weiteren kann am distalen Ende auch eine Blende zum Einstellen der Tiefenschärfe angeordnet sein (hier nicht dargestellt). Vorteil dieser Lösung ist, dass nur ein einziges optisches Element benötigt wird. Tendenziell ist die Baulänge der Optik hier allerdings größer, da der quellenseitige Strahlengang weitgehend im höher brechenden Medium verläuft.

Fig. 8 zeigt schließlich in einer stark vereinfachten Darstellung einen weiteren Detektor für einen Tastkopf gemäß der vorliegenden Erfindung. In diesem Fall beinhaltet der Detektor 106 zwei parallel zueinander angeordnete, jedoch seitlich zueinander versetzte Zeilensensoren 108, 110, die gemeinsam von der Lichtfigur 64 (hier wiederum ein Kreisring) beleuchtet werden. Auch mit einer solchen Anordnung lässt sich der Radius und die Lage der Lichtfigur 64 relativ zu den Zeilensensoren 108, 110 bestimmen. Da hier nur zwei Zeilensensoren verwendet werden, kann die Messgeschwindigkeit weiter gesteigert werden. Die Erzeugung der Lichtfigur 64 kann auf jede der hier beschriebenen Arten erfolgen. Des weiteren können die Zeilensensoren 108, 110 in Reihe zueinander verschaltet sein, woraus sich die bereits erläuterten Vorteile ergeben.

**Patentansprüche**

1. Tastkopf für ein Koordinatenmessgerät, mit einer Tastkopfbasis (40) und mit einem relativ dazu beweglichen Tastelement (28), insbesondere einem Taststift, ferner mit einem optischen Detektor zum Erfassen von Auslenkungen des Tastelements (28) relativ zur Tastkopfbasis (40), wobei der optische Detektor einen Lichtsender (52) zum Erzeugen einer definierten Lichtfigur (64) und einen Lichtempfänger beinhaltet, **dadurch gekennzeichnet, dass** der Lichtempfänger zumindest zwei Zeilensensoren (54, 56, 68, 70; 108, 110) mit jeweils einer Vielzahl von zeilenförmig aneinandergereihten lichtempfindlichen Elementen (58) aufweist, und dass die zumindest zwei Zeilensensoren (54, 56, 68, 70; 108, 110) räumlich versetzt zueinander angeordnet sind, jedoch von der definierten Lichtfigur (64) gemeinsam beleuchtet werden, wobei mit Hilfe der Zeilensensoren (54, 56, 68, 70; 108, 110) ein Radius und eine Lage der Lichtfigur (64) relativ zu den Zeilensensoren (54, 56, 68, 70; 108, 110) bestimmbar ist.

2. Tastkopf nach Anspruch 1, **dadurch gekennzeichnet, dass** der Lichtempfänger zumindest drei, bevorzugt vier, Zeilensensoren (54, 56, 68, 70) aufweist.

3. Tastkopf nach Anspruch 1 oder 2, **dadurch gekennzeichnet, dass** die Zeilensensoren (54, 56, 68, 70) räumlich so zueinander versetzt sind, dass sie ein Sensorkreuz bilden.

4. Tastkopf nach einem der Ansprüche 1 bis 3, **dadurch gekennzeichnet, dass** der Lichtempfänger zwei in etwa parallele Zeilensensoren (108, 110) aufweist, die mit einem lateralen Abstand zueinander angeordnet sind.

5. Tastkopf nach einem der Ansprüche 1 bis 4, **dadurch gekennzeichnet, dass** die Zeilensensoren (54, 56, 68, 70; 108, 110) seriell miteinander verschaltet sind.

6. Tastkopf nach einem der Ansprüche 1 bis 5, **dadurch gekennzeichnet, dass** jeder Zeilensensor (54, 56, 68, 70) eine Ausleserichtung (72, 74) besitzt und dass zumindest zwei Zeilensensoren (54, 56) in Bezug auf die jeweilige Ausleserichtung (72, 74) gegenläufig zueinander angeordnet sind.

7. Tastkopf nach einem der Ansprüche 1 bis 6, **dadurch gekennzeichnet, dass** der Lichtsender (52) zwischen den Zeilensensoren (54, 56, 68, 70) und vorzugsweise auf einer gemeinsamen Trägerplatte (50) mit den Zeilensensoren (54, 56, 68, 70) angeordnet ist.

8. Tastkopf nach einem der Ansprüche 1 bis 7, **dadurch gekennzeichnet, dass** die definierte Lichtfigur (64) linienförmig ist, insbesondere eine Kreislinie ist.

9. Tastkopf nach Anspruch 8, **dadurch gekennzeichnet, dass** die linienförmige Lichtfigur (64) einen im Querschnitt etwa gaußähnlichen Intensitätsverlauf (66) aufweist.

10. Tastkopf nach einem der Ansprüche 1 bis 9, **gekennzeichnet durch** eine Ringlinse (62) zum Erzeugen der definierten Lichtfigur (64).

11. Tastkopf nach Anspruch 10, **dadurch gekennzeichnet, dass** die Ringlinse (62) in einer zumindest teilweise transparenten Trägerplatte (60) ausgebildet ist, die die Zeilensensoren (54, 56, 68, 70) überdeckt.

12. Tastkopf nach einem der Ansprüche 1 bis 11, **gekennzeichnet durch** einen Konusreflektor (92), der um den Lichtsender (52) herum angeordnet ist, wobei vorzugsweise noch eine Zentralblende (88) oberhalb des Konusreflektors (92) angeordnet ist.

13. Tastkopf nach einem der Ansprüche 1 bis 12, **gekennzeichnet durch** ein transparentes Konuselement (98), das oberhalb des Lichtsenders (52) angeordnet ist.

14. Tastkopf nach einem der Ansprüche 1 bis 13, **gekennzeichnet durch** ein transparentes Zylinderelement (102) und vorzugsweise eine Zentralblende (88), die oberhalb des Lichtsenders (52) angeordnet sind.

15. Tastkopf nach einem der Ansprüche 1 bis 14, **gekennzeichnet durch** einen Kegelspiegel (84), der oberhalb des Lichtsenders (52) angeordnet ist.

16. Koordinatenmessgerät mit einem Tastkopf nach einem der Ansprüche 1 bis 15.

**Claims**

1. Scanning head for a coordinate measuring device, comprising a scanning head base (40) and a feeler (28) which is displaceable relative thereto, in particular a stylus, and with an optical detector for recording the displacements of the feeler (28) relative to the scanning head base (40), wherein the optical detector comprises a light emitter (52) for the generation of a defined light figure (64), and a light receiver, **characterized in that** the light receiver comprises at least two line sensors (54, 56, 68, 70; 108, 110) each having a plurality of linear serially-arranged light sensitive elements (58), and that the at least two line sensors (54, 56, 68, 70; 108, 110) are arranged at a spatial separation from each other, yet illuminated in common by the defined light figure (64), wherein with the help of the line sensors (54, 56, 68, 70; 108, 110) a radius and the position of the light figure (64) relative to the line sensors (54, 56, 68, 70; 108, 110) is determinable.

2. Scanning head according to claim 1, **characterized in that** the light receiver comprises at least three, preferably four, line sensors (54, 56, 68, 70).

3. Scanning head according to claim 1 or 2, **characterized in that** the line sensors (54, 56, 68, 70) are arranged at a spatial separation from each other, such that they form a sensor cross.

4. Scanning head according to one of the claims 1 to 3, **characterized in that** the light receiver comprises two substantially parallel line sensors (108, 110), which are arranged in a lateral separation to each other.

5. Scanning head according to one of the claims 1 to 4, **characterized in that** the line sensors (54, 56, 68, 70; 108, 110) are serially connected to each other.

6. Scanning head according to one of the claims 1 to 5, **characterized in that** each line sensor (54, 56, 68, 70) has a scanning direction (72, 74) and that at least two line sensor (54, 56) are arranged in opposite direction to each other with regard to the relative scanning direction (72, 74).

7. Scanning head according to one of the claims 1 to 6, **characterized in that** the light emitter (52) is arranged in between the line sensors (54, 56, 68, 70), preferably on a common carrier plate (50) with the line sensors (54, 56, 68, 70).

8. Scanning head according to one of the claims 1 to 7, **characterized in that** the defined light figure (64) is formed as a line, in particular as a circular line.

9. Scanning head according to claim 8, **characterized in that** the line-shaped light figure (64) comprises in section a gaussian-like intensity distribution.

10. Scanning head according to one of the claims 1 to 9, **characterized by** an echelon lens (62) for the generation of the defined light figure (64).

11. Scanning head according to claim 10, **characterized in that** the echelon lens (62) is arranged as an at least partially transparent carrier plate (60), which covers the line sensors (54, 56, 68, 70).

12. Scanning head according to one of the claims 1 to 11, **characterized by** a reflector cone (92), which is arranged around the light emitter (52), wherein preferably a central diaphragm (88) is arranged above the reflector cone (92).

13. Scanning head according to one of the claims 1 to 12, **characterized by** a transparent cone element (98) which is arranged above the light emitter (52).

14. Scanning head according to one of the claims 1 to 13, **characterized by** a transparent cylinder element (102), and preferably a central diaphragm (88) which is arranged above the light emitter (52).

15. Scanning head according to one of the claims 1 to 14, **characterized by** a cone mirror (86) which is arranged above the light emitter (52).

16. Coordinate measuring device with a scanning head according to one of the claims 1 to 15.

**EP 1 718 925 B1**

**Revendications**

1. Tête de palpage pour un appareil de mesure de coordonnées, comprenant une base de tête de palpage (40) et comprenant un élément de palpage (28) mobile par rapport à celle-ci, notamment un palpeur, comprenant en outre un détecteur optique pour détecter des déviations de l'élément de palpage (28) par rapport à la base de tête de palpage (40), le détecteur optique incluant un émetteur de lumière (52) pour générer un motif lumineux (64) défini et un récepteur de lumière, **caractérisée en ce que** le récepteur de lumière présente au moins deux capteurs linéaires (54, 56, 68, 70 ; 108, 110) respectivement munis d'une pluralité d'éléments (58) photosensibles rectilignes alignés les uns contre les autres, et **en ce que** les au moins deux capteurs linéaires (54, 56, 68, 70 ; 108, 110) sont disposés décalés dans l'espace l'un par rapport à l'autre, mais sont toutefois éclairés conjointement par le motif lumineux (64) défini, un rayon et une position du motif lumineux (64) par rapport aux capteurs linéaires (54, 56, 68, 70 ; 108, 110) pouvant être déterminés à l'aide des capteurs linéaires (54, 56, 68, 70 ; 108, 110).

2. Tête de palpage selon la revendication 1, **caractérisée en ce que** le récepteur de lumière présente au moins trois, de préférence quatre, capteurs linéaires (54, 56, 68, 70).

3. Tête de palpage selon la revendication 1 ou 2, **caractérisée en ce que** les capteurs linéaires (54, 56, 68, 70) sont décalés les uns par rapport aux autres dans l'espace de telle sorte qu'ils forment une croix de détection.

4. Tête de palpage selon l'une des revendications 1 à 3, **caractérisée en ce que** le récepteur de lumière présente deux capteurs linéaires (108, 110) approximativement parallèles qui sont disposés avec un écart latéral l'un par rapport à l'autre.

5. Tête de palpage selon l'une des revendications 1 à 4, **caractérisée en ce que** les capteurs linéaires (54, 56, 68, 70 ; 108, 110) sont branchés en série les uns avec les autres.

6. Tête de palpage selon l'une des revendications 1 à 5, **caractérisée en ce que** chaque capteur linéaire (54, 56, 68, 70) possède un sens de lecture (72, 74) et **en ce qu'**au moins deux capteurs linéaires (54, 56) sont disposés à l'opposé l'un de l'autre en référence au sens de lecture (72, 74) respectif.

7. Tête de palpage selon l'une des revendications 1 à 6, **caractérisée en ce que** l'émetteur de lumière (52) est disposé entre les capteurs linéaires (54, 56, 68, 70) et de préférence sur une plaque porteuse (50) commune avec les capteurs linéaires (54, 56, 68, 70).

8. Tête de palpage selon l'une des revendications 1 à 7, **caractérisée en ce que** le motif lumineux (64) défini est de forme rectiligne, notamment est une ligne circulaire.

9. Tête de palpage selon la revendication 8, **caractérisée en ce que** le motif lumineux (64) de forme rectiligne présente une courbe d'intensité (66) à la section transversale approximativement de type gaussienne.

10. Tête de palpage selon l'une des revendications 1 à 9, **caractérisée par** une lentille annulaire (62) pour générer le motif lumineux (64) défini.

11. Tête de palpage selon la revendication 10, **caractérisée en ce que** la lentille annulaire (62) est formée dans une plaque porteuse (60) au moins partiellement transparente qui recouvre les capteurs linéaires (54, 56, 68, 70).

12. Tête de palpage selon l'une des revendications 1 à 11, **caractérisée par** un réflecteur conique (92) qui est disposé autour de l'émetteur de lumière (52), un obturateur central (88) étant de préférence encore disposé au-dessus du réflecteur conique (92).

13. Tête de palpage selon l'une des revendications 1 à 12, **caractérisée par** un élément conique (98) transparent qui est disposé au-dessus de l'émetteur de lumière (52).

14. Tête de palpage selon l'une des revendications 1 à 13, **caractérisée par** un élément cylindrique (102) transparent et de préférence un obturateur central (88) qui sont disposés au-dessus de l'émetteur de lumière (52).

15. Tête de palpage selon l'une des revendications 1 à 14, **caractérisée par** un miroir conique (84) qui est disposé au-dessus de l'émetteur de lumière (52).

**16.** Appareil de mesure de coordonnées équipé d'une tête de palpage selon l'une des revendications 1 à 15.

Fig.1

Fig.2

Fig.3

Fig.4

Fig.5

Fig.6

Fig.7

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0373644 A1
- WO 0060307 A
- DE 3826581 A1
- DE 2741413 A1
- US 5345689 A